# EUROPEAN PATENT SPECIFICATION

(11) **EP 3 443 173 B1**
(45) Date of publication and mention of the grant of the patent: **24.02.2021**
(21) Application number: 17719735.7
(22) Date of filing: 13.04.2017
(51) Int. Cl.: E04B 5/04, E03C 1/00, E04B 5/48, F16L 27/12, F16L 37/00

(54) **BUILDING ELEMENT WITH PIPES AND INSERT COUPLING**
BAUELEMENT MIT ROHREN UND EINSATZKOPPLUNG
ÉLÉMENT DE CONSTRUCTION COMPORTANT DES TUYAUX ET DES RACCORDS D'INSERTS

(30) Priority: 13.04.2016 NL 2016600
(43) Date of publication of application: 20.02.2019
(73) Proprietor: Dyka B.V., 8331 LJ Steenwijk (NL)
(72) Inventor: DE BOER, Klaas Alexander, 8331 LJ Steenwijk (NL); ZUURMOND, Johannes, 8331 LJ Steenwijk (NL)
(74) Representative: Geurts, Franciscus Antonius
(86) International application number: PCT/NL2017/050233
(87) International publication number: WO 2017/179982

(56) References cited:
- EP-A1- 1 972 844
- EP-A1- 2 818 606
- EP-A2- 0 924 360
- EP-A2- 1 126 095
- WO-A1-81/00445
- WO-A2-2010/008295
- DE-A1- 10 214 967
- FR-A1- 2 859 744
- US-A- 4 386 796

## Description

### BACKGROUND OF THE INVENTION

The present invention relates to an assembly of a first plate-shaped construction element and a second plate-shaped construction element which, parallel to each other, form a horizontal floor or ceiling of a building.

Such prefab construction elements, for instance made of concrete, may already have been provided with internal pipes for instance for the electrical wiring of the building. EP 0 924 360 A2 shows an assembly according to the preamble of claim 1.

There is a need to also provide prefab construction elements with pipes for the water management, sewer system, electricity, air treatment or ventilation, which pipes can easily be coupled during installation.

### SUMMARY OF THE INVENTION

The invention provides an assembly according to claim 1.

The first construction element and the second construction element in which the first pipe and the second pipe have been accommodated, form prefab construction elements that can be transported to a building site in order to be placed in the building under construction, such as a concrete slab. The fragile outer ends of the pipes are either situated in the first recess, which is situated recessed from the head surface of the construction element, or said fragile outer ends may project from the construction element. In case the fragile outer ends of the pipes are situated in the first recess, the head surface will buffer the blows during transport and hoisting the construction element in, and the outer ends of the pipes remain well-protected. Once the construction elements have been placed, the pipes can be coupled one to the other by introducing the insert coupling according to the invention into the installation space and converting it to the second position or condition. The insert coupling can then be installed by telescopically extending the slider pipes so that the engaging parts of the insert coupling engage onto the pipes of the construction elements. This is easy to do using two hands.

In one embodiment thereof, the insert coupling comprises a circumferential, flexible sealing between the first slider pipe and the second slider pipe.

In one embodiment, the second construction element contains a second recess that is adjacent to the second head surface, wherein the first recess and the second recess jointly define the installation space for the insert coupling. The recesses that are complementary to each other can in that case each remain small in size, whereas a sufficiently large installation space for the insert coupling is realized.

In one embodiment, the installation space debouches in the upper surface and/or the lower surface of the construction elements, so that the insert coupling can easily be placed in there from the top side or bottom side of the construction elements.

In one embodiment thereof, the installation space debouches in the upper surface or lower surface, and is bounded opposite the debouching location by a bottom surface in the base material of the construction elements. The insert coupling can then for instance be installed from the top side of the construction elements, wherein the bottom surface prevents the insert coupling from falling down when it is being placed in there.

In one embodiment, halfway the height of the first construction element, the first head surface merges via a support surface into a front surface situated recessed from the first head surface in order to form a support edge of the first construction element, and the second head surface merges via a bearing surface into a front surface situated recessed from the second head surface in order to form a bearing edge of the second construction element, wherein the second construction element with its bearing edge is situated at the support edge. The construction elements can then easily be placed in a mutual bond.

In an alternative, blunt embodiment the first head surface and the second head surface extend over the full height of the construction elements.

In one embodiment, the first pipe has a first end edge that is situated in a first wall of the installation space or is situated recessed in the base material of the first construction element, and/or the second pipe has a second end edge that is situated in a second wall of the installation space or is situated recessed in the base material of the second construction element. As a result, the pipe in question is also protected inside the recess against for instance the hoist slings with which the construction element can be hoisted up.

In one embodiment thereof, the first pipe and/or the second pipe behind the first end edge or second end edge, respectively, is free from the base material of the construction elements and an annular space extends around the outer end of the first pipe and/or the second pipe. The insert coupling can then easily be connected by for instance partially pushing it over the pipe, wherein the overlapping portion ends up in the annular space.

In one embodiment, in the second position or condition, the insert coupling and the first pipe, and the insert coupling and the second pipe, are partially inserted into each other in order to connect the first pipe and the second pipe in a flowing manner.

In one embodiment thereof, the insert coupling comprises a first introduction pipe that fits in the first pipe, and/or a second introduction pipe that fits in the second pipe. The insert coupling can then be installed by inserting the introduction pipe in question into the pipe in the construction element.

In one embodiment thereof, a circumferential, flexible sealing extends at the interior of the first pipe and/or second pipe, which sealing engages onto the first introduction pipe or the second introduction pipe, respectively. The flexible sealing has then already been incorporated in the construction elements and is protected in there.

In an alternative embodiment, the insert coupling comprises a first pipe coupling that engages around the first pipe, and/or a second pipe coupling that engages around the second pipe. The insert coupling can then easily be connected by placing the pipe coupling in question at the end edge of the pipe and subsequently, for instance pushing it over the pipe.

In one embodiment, the insert coupling has been provided with a circumferential, flexible sealing inside the first pipe coupling and/or the second pipe coupling.

In one embodiment, the first pipe coupling and/or the second pipe coupling comprises a one-way coupling, which blocks retraction from the first pipe or second pipe immediately once it has been engaged. Subsequent to placing and pushing, the one-way coupling is immediately fixated.

Alternatively, the first pipe coupling and/or the second pipe coupling is a press-coupling, compression fitting or a coupling that is threaded at the first pipe or second pipe.

In one embodiment, the first pipe and the second pipe have a circular cross-section having an outer diameter of 30-160 mm, preferably 40-125 mm, more preferably 50-90 mm. They can for instance be used as sewer pipes.

In one embodiment, the first pipe and the second pipe may have a circular cross-section having an outer diameter of 30-125 mm. They can for instance be used as ventilation ducts.

In one embodiment, the first pipe and the second pipe are medium transporting pressure pipes having a circular cross-section having an outer diameter of 10-90 mm, preferably 14-63 mm, more preferably 16-50 mm, more preferably 16-40 mm, most preferably 16-25 mm. They can for instance be used as water supply pipes.

In one embodiment, the first pipe and the second pipe may have an oval cross-section.

Alternatively, the first pipe and the second pipe may have a rectangular or square cross-section.

Said oval, rectangular or square cross-sections will for instance make the pipes highly suitable for use as ventilation ducts.

Said pipe diameters and pipe cross-sections and the various embodiments of the insert coupling, in particular their connecting parts, may be used together in any combination according to need.

In a preferred embodiment, the base material of the construction elements is concrete.

In a preferred embodiment, the base material of the construction elements is wood.

In a preferred embodiment, the base material of the construction elements is synthetic material, such as PUR, epoxy or polyester.

In a preferred embodiment, the base material of the construction elements is metal, such as iron.

In a preferred embodiment, the first pipe and the second pipe have been made of synthetic material, such as PVC or PE.

In a preferred embodiment, the first pipe and the second pipe have been made of metal, such as copper or iron.

In a preferred embodiment, the insert coupling has been made of synthetic material, such as PVC or PE.

In a preferred embodiment, the insert coupling has been made of metal, such as copper or iron.

US 4,386,796 discloses a telescopic slider tube for repairing a damaged subterranean pipe, of which the two pipe parts are perfectly aligned.

The aspects and measures described in this description and the claims of the application and/or shown in the drawings of this application may where possible also be used individually. Said individual aspects and other aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figures 1A-1H show isometric views and top views of two concrete slabs having cast sewer pipes in them and a coupling for the pipes, according to a first embodiment of the invention; and
Figure 2 shows an isometric view of a variant of the first embodiment according to figures 1A-1H.

### DETAILED DESCRIPTION OF THE DRAWINGS

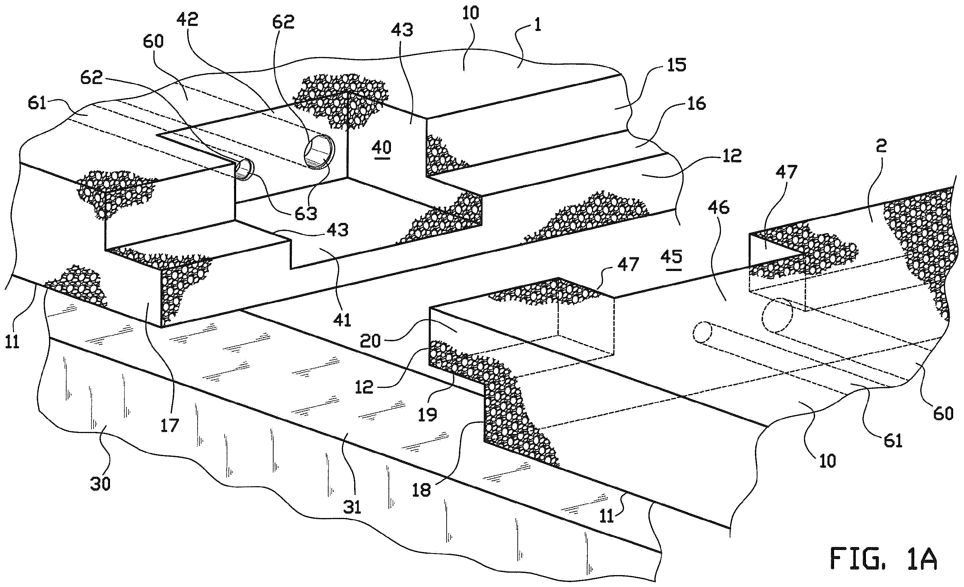

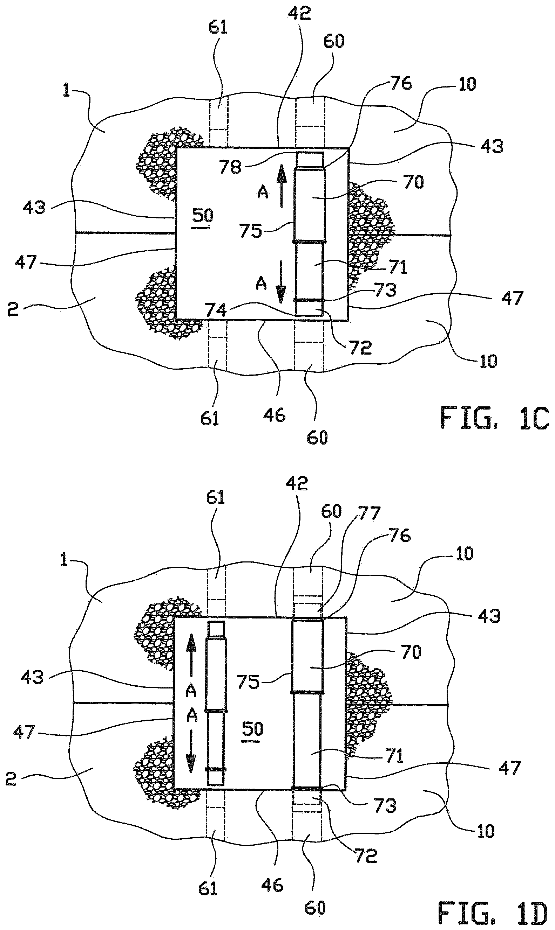

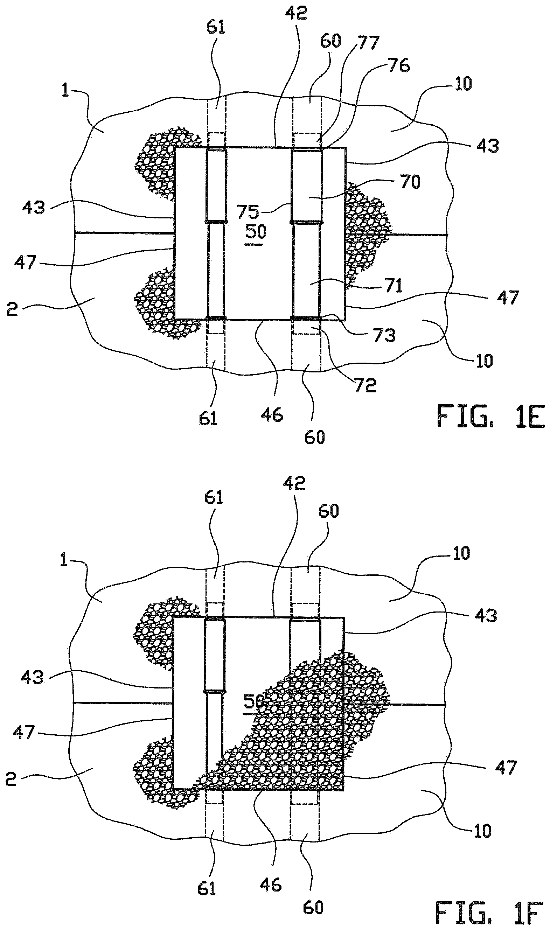

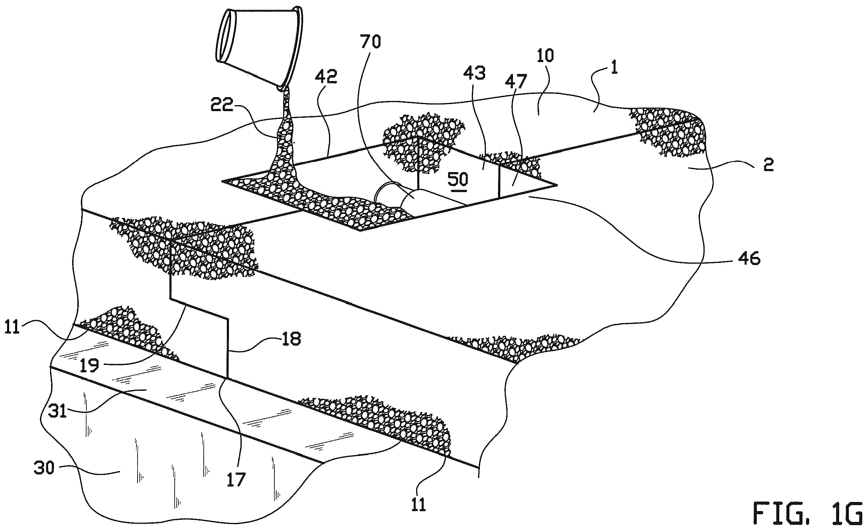

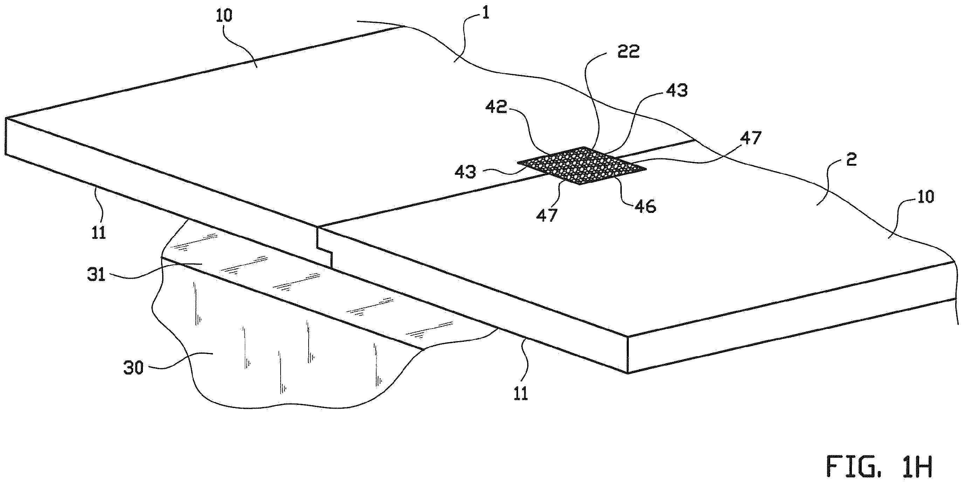

Figure 1A schematically shows a part of a building that is being erected, constructed using prefab plate-shaped construction elements having a rectangular basic outline. In this example, the construction elements are a first concrete slab 1 and a second concrete slab 2, which are placed horizontally along their edges on a wall 30 in order to span a room and to form a floor. Possible base materials for the construction elements are concrete, wood, steel or synthetic material, such as PUR, epoxy or polyester.

The concrete slabs 1, 2 both have an upper surface 10 and a lower surface 11 extending parallel to each other, and a head surface 12 extending transverse thereto. At approximately halfway the height, the head surface 12 of the first concrete slab 1 merges via a support surface 16 into a front surface 15 situated recessed, as a result of which a rebate or support edge 17 extending over the width of the first concrete slab 1 is defined. At approximately halfway the height, the head surface 12 of the second concrete slab 2 merges via a bearing surface 19 into a front surface 18 situated recessed, as a result of which a nose or bearing edge 20 extending over the width of the second concrete slab 2 is formed. When constructing the building, the first concrete slab 1 will be placed on the lateral side on the upper surface 31 of the wall 30, after which the second concrete slab 2 will be placed thereon with the bearing edge 20 in order to form a floor. The front surface 18 of the second concrete slab 2 will then abut the head surface 12 of the first concrete slab 1.

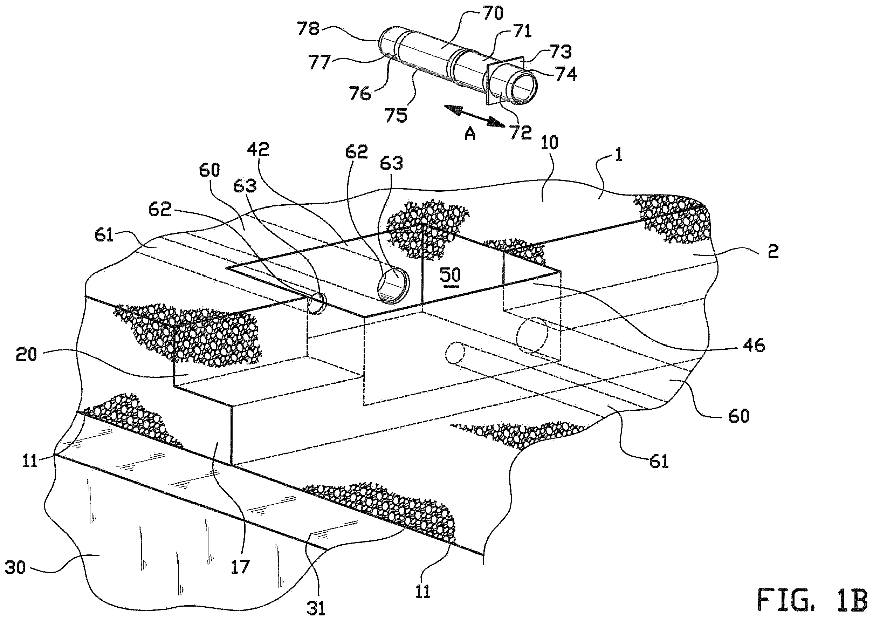

The first concrete slab 1 has been provided with a first recess 40 that is bounded by a bottom surface 41 extending parallel to the upper surface 10 and that is situated lower than the support surface 16, a rear surface 42 extending parallel to the head surface 12 and that is situated recessed more deeply than the front surface 15, and two parallel side surfaces 43 transverse thereto. The second concrete slab 2 has been provided with a second recess 45 that is bounded by a rear surface 46 that is situated in the extension of the front surface 18, and two parallel side surfaces 47 transverse thereto. In the placed condition of the concrete slabs 1, 2 as shown in figure 1B, the first recess 40 and the second recess 45 jointly form a closed off installation space 50 having a rectangular contour that can only be accessed from above. The installation space 50 with the rear surfaces 42, 46 that are situated recessed, is always the same for all three embodiments described herein.

Figures 1A-1H show further details of the first embodiment of the invention. In this embodiment, two parallel sewer pipes 60, 61 have been accommodated in the floor slabs 1, 2, the sewer pipes having different diameters in this example. At their ends the synthetic sewer pipes 60, 61 have a bush having an end edge 62, which is situated in the rear surface 42, 46 of the installation space 50 or which is situated recessed a few mm therefrom, and an internal rubber sealing 63 just behind the end edge 62. The sewer pipes 60, 61 are situated in each other's extension and are connected to each other in a flowing manner by means of insert couplings 70.

As shown in figures 1B and 1C, the insert couplings 70 have a first cylindrical, synthetic slider pipe 71 which at one side merges into a cylindrical introduction pipe 72 having an oblique pilot edge 74 and a circumferential flange 73. The first synthetic slider pipe 71 has been inserted in a wider second synthetic slider pipe 75 which at one side, via a stop edge 76, merges into an introduction pipe 77 having an oblique pilot edge 78. There is an internal, rubber sealing in the second slider pipe 75, which sealing seals off all around against the first slider pipe 71. The slider pipes 71, 75 can be shifted in direction A relative to each other in order to adjust the distance between the introduction pipes 72, 77.

Once the first concrete slab 1 and the second concrete slab 2 have been placed as shown in figure 1B, the insert couplings 70 are being placed in the first retracted position in the installation space 50 and subsequently in direction A brought into the second, extended position as shown in figures 1C-1E. As a result, the introduction pipes 72, 77 extend up to the circumferential flange 73 or the stop edge 76, respectively, in the sewer pipes 60, 61, so that the sealings 63 engage onto them in a watertight manner. Subsequently the installation space 50 is filled with fluid concrete 22 to connect the upper surfaces 10 of the concrete slabs 1, 2 to each other.

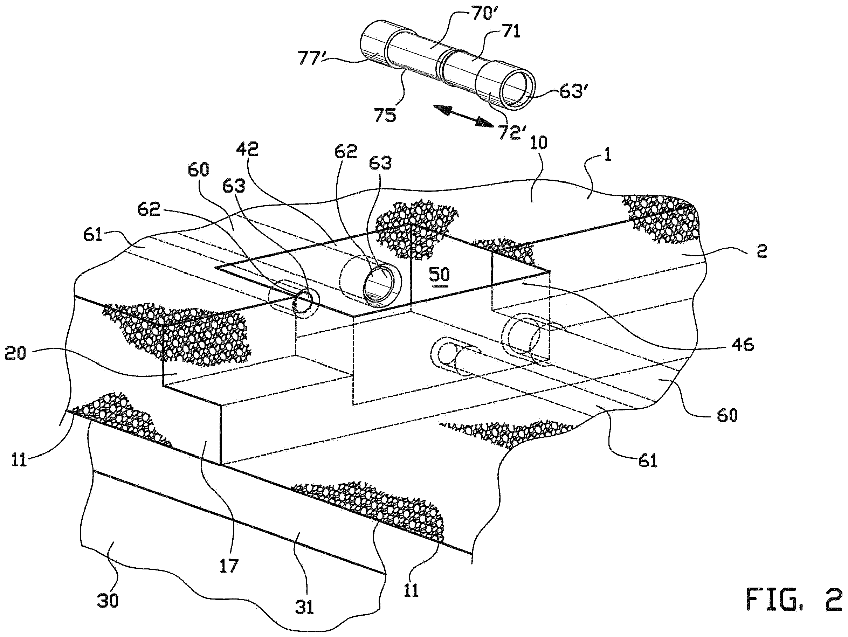

Figure 2 shows a variant of the first embodiment as shown in figures 1A-1H. Corresponding parts have been provided with the same reference numbers. Only the parts deviating therefrom will be further discussed below. In this variant the sewer pipes 60, 61 are ending in a cylindrical, annular space 21 which debouches in the rear surfaces 42, 46, as a result of which the outer ends will sit in there so as to be free from the concrete slabs 1, 2. The end edges 62 of the sewer pipes 60, 61 are situated recessed in the rear surfaces 42, 46 or a few mm therefrom. The insert coupling 70' comprises the first cylindrical synthetic slider pipe 71 which, in this variant, merges into a wider accommodation pipe 72' in which a rubber sealing 63' has been accommodated. The second slider pipe 75 also merges into a wider accommodation pipe 77' having said rubber sealing 63'. Once the concrete slabs 1, 2 have been placed, the insert coupling 70' is placed in the installation space 50 in the retracted position and is telescopically extended in direction A, as a result of which the accommodation pipes 72', 77' end up in the cylindrical annular spaces 21 and engage onto the sewer pipes 60, 61 in a sealing manner inside them.

The above-mentioned characteristics in terms of shape of the pipes 60, 61 and the insert couplings 70, 70', in particular those parts that engage onto the pipes, can all be combined with each other. Per pipe, the engagement can take place inside the pipe or around the pipe, irrespective of the type of engagement at the other side of the insert coupling. The scope of protection as stated in the claims therefore is by no means restricted to the specific combinations described in detail above.

In the above-mentioned examples the pipes 60, 61 and the parts of the various insert couplings 70, 70' have been made of synthetic material, such as PVC or PE. Alternatively, the pipes and the parts have been made of metal, such as copper or iron.

The above description has been included to illustrate the operation of preferred embodiments of the invention and not to limit the scope of the invention. Starting from the above explanation many variants that fall within the scope of the present invention will be evident to an expert.

## Claims

1. Assembly of a first plate-shaped construction element (1) and a second plate-shaped construction element (2) which, parallel next to each other, form a horizontal floor or ceiling of a building, wherein a first pipe (60) has been accommodated in the first construction element (1) and a second pipe (61) has been accommodated in the second construction element (2), which pipes are coupled to each other by means of an insert coupling (70) connecting the first pipe and the second pipe, wherein the first construction element (1) comprises a first head surface (12) and a first recess (40) adjacent thereto and the second construction element (2) comprises a second head surface (12) extending parallel to the first head surface, wherein the first recess (40) defines an installation space (50) for the insert coupling where the first pipe and the second pipe are ending, wherein the insert coupling (70, 70') can be converted from a first position or condition in which it can be placed in the installation space, to a second position or condition in which it engages onto the first pipe (60) and the second pipe (61), said assembly being **characterized in that** the insert coupling comprises a first slider pipe (71) and a second slider pipe (75) between the parts that engage onto the first pipe (60) or second pipe (61), which slider pipes (71, 75) are telescopically inserted into each other, wherein the insert coupling can be converted between the first position and the second position by shifting (A) the slider pipes relative to each other.

2. Assembly according to claim 1, wherein the insert coupling (70, 70') comprises a circumferential, flexible sealing between the first slider pipe (71) and the second slider pipe (75).

3. Assembly according to any one of the preceding claims, wherein in the second position or condition, the insert coupling (70, 70') and the first pipe (60), and the insert coupling (70) and the second pipe (61) have been partially inserted into each other.

4. Assembly according to claim 3, wherein the insert coupling (70) comprises a first introduction pipe (72) that fits in the first pipe (60) and/or a second introduction pipe (77) that fits in the second pipe (61), wherein preferably a circumferential, flexible sealing extends at the interior of the first pipe (60) and/or second pipe (61), which sealing engages onto the first introduction pipe (72) or the second introduction pipe (77), respectively.

5. Assembly according to claim 3, wherein the insert coupling (70') comprises a first pipe coupling (72') that engages around the first pipe (60), and/or a second pipe coupling (77') that engages around the second pipe (61), wherein the insert coupling (70) has preferably been provided with a circumferential, flexible sealing inside the first pipe coupling and/or the second pipe coupling.

6. Assembly according to claim 5, wherein the first pipe coupling (72') and/or the second pipe coupling (77') comprises a one-way coupling, which blocks retraction from the first pipe (60) or second pipe (61) immediately once it has been engaged.

7. Assembly according to any one of the preceding claims, wherein the second construction element (2) contains a second recess (45) that is adjacent to the second head surface (12), wherein the first recess (40) and the second recess (45) jointly define the installation space (50) for the insert coupling (70, 70').

8. Assembly according to any one of the preceding claims, wherein the installation space (50) debouches in the upper surface (10) and/or the lower surface (11) of the construction elements (1; 2).

9. Assembly according to claim 8, wherein the installation space (50) debouches in the upper surface (10) or lower surface (11) and opposite the debouching location is bounded by a bottom surface (41) in the base material of the construction elements (1; 2).

10. Assembly according to any one of the preceding claims, wherein halfway the height of the first construction element (1) the first head surface (12) merges via a support surface (16) into a front surface (15) situated recessed from the first head surface (12) in order to form a support edge of the first construction element (1), and wherein the second head surface (12) merges via a bearing surface (19) into a front surface (18) situated recessed from the second head surface (12) in order to form a bearing edge of the second construction element (2), wherein the second construction element (2) with its bearing edge is situated at the support edge.

11. Assembly according to any one of the claims 1-9, wherein the first head surface (12) and the second head surface (12) extend over the full height of the construction elements (1; 2).

12. Assembly according to any one of the preceding claims, wherein the first pipe has a first end edge that is situated in a first wall of the installation space or is situated recessed in the base material of the first construction element, and/or wherein the second pipe has a second end edge that is situated in a second wall of the installation space or is situated recessed in the base material of the second construction element, wherein preferably the first pipe and/or the second pipe behind the first end edge or second end edge, respectively, is free from the base material of the construction elements and an annular space extends around the outer end of the first pipe and/or the second pipe.

13. Assembly according to any one of the preceding claims, wherein the first pipe and the second pipe have a circular cross-section having an outer diameter of 30-160 mm, preferably 40-125 mm, more preferably 50-90 mm, or wherein the first pipe and the second pipe have an oval cross-section, or wherein the first pipe and the second pipe have a rectangular or square cross-section.

## Patentansprüche

1. Baugruppe aus einem ersten plattenförmigen Bauelement (1) und einem zweiten plattenförmigen Bauelement (2), die parallel nebeneinander einen horizontalen Boden oder eine Decke eines Gebäudes bilden, wobei ein erstes Rohr (60) in dem ersten Bauelement (1) untergebracht worden ist und ein zweites Rohr (61) in dem zweiten Bauelement (2) untergebracht worden ist, wobei die Rohre mittels einer Einsatzkopplung (70) zusammengekoppelt sind, die das erste Rohr und das zweite Rohr verbindet, wobei das erste Bauelement (1) eine erste Stirnfläche (12) und eine erste Aussparung (40) daran angrenzend umfasst und das zweite Bauelement (2) eine zweite Stirnfläche (12) umfasst, die sich parallel zu der ersten Stirnfläche erstreckt, wobei die erste Aussparung (40) einen Einbauraum (50) für die Einsatzkopplung definiert, wo das erste Rohr und das zweite Rohr enden, wobei die Einsatzkopplung (70, 70') von einer ersten Position oder Lage, in der sie in dem Einbauraum angeordnet werden kann, in eine zweite Position oder Lage, in der sie auf das erste Rohr (60) und das zweite Rohr (61) eingreift, umgewandelt werden kann, wobei die Baugruppe **dadurch gekennzeichnet ist, dass** die Einsatzkopplung ein erstes Gleitrohr (71) und ein zweites Gleitrohr (75) zwischen den Teilen umfasst, die auf das erste Rohr (60) oder zweite Rohr (61) eingreifen, wobei die Gleitrohre (71, 75) teleskopartig ineinander gefügt sind, wobei die Einsatzkopplung zwischen der ersten Position und der zweiten Position umgewandelt werden kann, indem die Gleitrohre zueinander verschoben (A) werden.

2. Baugruppe nach Anspruch 1, wobei die Einsatzkopplung (70, 70') eine flexible Umfangsdichtung zwischen dem ersten Gleitrohr (71) und dem zweiten Gleitrohr (75) umfasst.

3. Baugruppe nach einem der vorhergehenden Ansprüche, wobei in der zweiten Position oder Lage die Einsatzkopplung (70, 70') und das erste Rohr (60) und die Einsatzkopplung (70) und das zweite Rohr (61) teilweise ineinander gefügt worden sind.

4. Baugruppe nach Anspruch 3, wobei die Einsatzkopplung (70) ein erstes Einführrohr (72) umfasst, das in das erste Rohr (60) passt, und/oder ein zweites Einführrohr (77), das in das zweite Rohr (61) passt, wobei vorzugsweise sich eine flexible Umfangsdichtung an dem Inneren des ersten Rohrs (60) und/oder zweiten Rohrs (61) erstreckt, wobei die Dichtung jeweils auf das erste Einführrohr (72) oder das zweite Einführrohr (77) eingreift.

5. Baugruppe nach Anspruch 3, wobei die Einsatzkopplung (70') eine erste Rohrkopplung (72') umfasst, die um das erste Rohr (60) eingreift, und/oder eine zweite Rohrkopplung (77'), die um das zweite Rohr (61) eingreift, wobei die Einsatzkopplung (70) vorzugsweise mit einer flexiblen Umfangsdichtung innerhalb der ersten Rohrkopplung und/oder der zweiten Rohrkopplung versehen worden ist.

6. Baugruppe nach Anspruch 5, wobei die erste Rohrkopplung (72') und/oder die zweite Rohrkopplung (77') eine Einwegkopplung umfassen, die ein Zurückziehen von dem ersten Rohr (60) oder zweiten Rohr (61) unmittelbar blockiert, sobald es in Eingriff gebracht worden ist.

7. Baugruppe nach einem der vorhergehenden Ansprüche, wobei das zweite Bauelement (2) eine zweite Aussparung (45) enthält, die an die zweite Stirnfläche (12) angrenzt, wobei die erste Aussparung (40) und die zweite Aussparung (45) zusammen den Einbauraum (50) für die Einsatzkopplung (70, 70') definieren.

8. Baugruppe nach einem der vorhergehenden Ansprüche, wobei der Einbauraum (50) in die obere Oberfläche (10) und/oder die untere Oberfläche (11) der Bauelemente (1; 2) mündet.

9. Baugruppe nach Anspruch 8, wobei der Einbauraum (50) in die obere Oberfläche (10) oder die untere Oberfläche (11) mündet und gegenüber der Mündungsstelle von einer Bodenfläche (41) in dem Grundmaterial der Bauelemente (1; 2) begrenzt ist.

10. Baugruppe nach einem der vorhergehenden Ansprüche, wobei auf halber Höhe des ersten Bauelements (1) die erste Stirnfläche (12) über eine Auflagefläche (16) in eine vordere Oberfläche (15) übergeht, die zurückgesetzt von der ersten Stirnfläche (12) angeordnet ist, um einen Auflagerand des ersten Bauelements (1) zu bilden, und wobei die zweite Stirnfläche (12) über eine Lagerfläche (19) in eine vordere Oberfläche (18) übergeht, die zurückgesetzt von der zweiten Stirnfläche (12) angeordnet ist, um einen Lagerrand des zweiten Bauelements (2) zu bilden, wobei das zweite Bauelement (2) mit seinem Lagerrand an dem Auflagerand angeordnet ist.

11. Baugruppe nach einem der Ansprüche 1 bis 9, wobei sich die erste Stirnfläche (12) und die zweite Stirnfläche (12) über die volle Höhe der Bauelemente (1; 2) erstrecken.

12. Baugruppe nach einem der vorhergehenden Ansprüche, wobei das erste Rohr einen ersten Endrand aufweist, der in einer ersten Wand des Einbauraums angeordnet ist oder zurückgesetzt in dem Grundmaterial des ersten Bauelements angeordnet ist, und/oder wobei das zweite Rohr einen zweiten Endrand aufweist, der in einer zweiten Wand des Einbauraums angeordnet ist oder zurückgesetzt in dem Grundmaterial des zweiten Bauelements angeordnet ist, wobei vorzugweise das erste Rohr und/oder das zweite Rohr jeweils hinter dem ersten Endrand oder zweiten Endrand frei von dem Grundmaterial der Bauelemente sind und sich ein ringförmiger Raum um das äußere Ende des ersten Rohrs und/oder des zweiten Rohrs erstreckt.

13. Baugruppe nach einem der vorhergehenden Ansprüche, wobei das erste Rohr und das zweite Rohr einen kreisrunden Querschnitt mit einem Außendurchmesser von 30 bis 160 mm aufweisen, vorzugsweise 40 bis 125 mm, besonders bevorzugt 50 bis 90 mm, oder wobei das erste Rohr und das zweite Rohr einen ovalen Querschnitt aufweisen, oder wobei das erste Rohr und das zweite Rohr einen rechteckigen oder quadratischen Querschnitt aufweisen.

## Revendications

1. Ensemble d'un premier élément de construction en forme de plaque (1) et d'un second élément de construction en forme de plaque (2) qui, parallèlement l'un à l'autre, forment un plancher ou plafond horizontal d'un bâtiment, dans lequel un premier tuyau (60) a été logé dans le premier élément de construction (1) et un second tuyau (61) a été logé dans le second élément de construction (2), lesquels tuyaux sont couplés l'un à l'autre au moyen d'un raccord d'insertion (70) reliant le premier tuyau et le second tuyau, dans lequel le premier élément de construction (1) comprend une première surface d'extrémité (12) et un premier évidement (40) adjacent à celle-ci et le second élément de construction (2) comprend une seconde surface d'extrémité (12) s'étendant parallèlement à la première surface d'extrémité, dans lequel le premier évidement (40) définit un espace d'installation (50) pour le raccord d'insertion à l'endroit où se terminent le premier tuyau et le second tuyau, dans lequel le raccord d'insertion (70, 70') peut passer d'une première position ou condition dans laquelle il peut être placé dans l'espace d'installation, à une seconde position ou condition dans laquelle il se met en prise sur le premier tuyau (60) et le second tuyau (61), ledit ensemble étant **caractérisé en ce que** le raccord d'insertion comprend un premier tuyau coulissant (71) et un second tuyau coulissant (75) entre les parties qui se mettent en prise sur le premier tuyau (60) ou le second tuyau (61), lesquels tuyaux coulissants (71, 75) sont insérés de manière télescopique l'un dans l'autre, dans lequel le raccord d'insertion peut commuter entre la première position et la seconde position en déplaçant (A) les tuyaux coulissants l'un par rapport à l'autre.

2. Ensemble selon la revendication 1, dans lequel le raccord d'insertion (70, 70') comprend un élément d'étanchéité circonférentiel souple entre le premier tuyau coulissant (71) et le second tuyau coulissant (75).

3. Ensemble selon l'une quelconque des revendications précédentes, dans lequel dans la seconde position ou condition, le raccord d'insertion (70, 70') et le premier tuyau (60), et le raccord d'insertion (70) et le second tuyau (61) ont été partiellement insérés l'un dans l'autre.

4. Ensemble selon la revendication 3, dans lequel le raccord d'insertion (70) comprend un premier tuyau d'introduction (72) qui s'emboîte dans le premier tuyau (60) et/ou un second tuyau d'introduction (77) qui s'emboîte dans le second tuyau (61), dans lequel de préférence un élément d'étanchéité circonférentiel souple s'étend à l'intérieur du premier tuyau (60) et/ou du second tuyau (61), lequel élément d'étanchéité se met en prise sur le premier tuyau d'introduction (72) ou le second tuyau d'introduction (77), respectivement.

5. Ensemble selon la revendication 3, dans lequel le raccord d'insertion (70') comprend un premier raccord de tuyau (72') qui se met en prise autour du premier tuyau (60), et/ou un second raccord de tuyau (77') qui se met en prise autour du second tuyau (61), dans lequel le raccord d'insertion (70) a été de préférence pourvu d'un élément d'étanchéité circonférentiel souple à l'intérieur du premier raccord de tuyau et/ou du second raccord de tuyau.

6. Ensemble selon la revendication 5, dans lequel le premier raccord de tuyau (72') et/ou le second raccord de tuyau (77') comprend/comprennent un raccord unidirectionnel, qui empêche une rétraction du premier tuyau (60) ou du second tuyau (61) immédiatement une fois qu'il a été mis en prise.

7. Ensemble selon l'une quelconque des revendications précédentes, dans lequel le second élément de construction (2) contient un second évidement (45) qui est adjacent à la seconde surface d'extrémité (12), dans lequel le premier évidement (40) et le second évidement (45) définissent conjointement l'espace d'installation (50) du raccord d'insertion (70, 70').

8. Ensemble selon l'une quelconque des revendications précédentes, dans lequel l'espace d'installation (50) débouche dans la surface supérieure (10) et/ou la surface inférieure (11) des éléments de construction (1 ; 2).

9. Ensemble selon la revendication 8, dans lequel l'espace d'installation (50) débouche dans la surface supérieure (10) ou la surface inférieure (11) et à l'opposé de l'emplacement de débouchement, est délimité par une surface inférieure (41) dans le matériau de base des éléments de construction (1 ; 2).

10. Ensemble selon l'une quelconque des revendications précédentes, dans lequel à mi-hauteur du premier élément de construction (1) la première surface d'extrémité (12) fusionne via une surface de support (16) avec une surface avant (15) située en retrait par rapport à la première surface extrémité (12) afin de former un bord de support du premier élément de construction (1), et dans lequel la seconde surface d'extrémité (12) fusionne via une surface porteuse (19) avec une surface avant (18) située en retrait par rapport à la seconde surface d'extrémité (12) afin de former un bord porteur du second élément de construction (2), dans lequel le second élément de construction (2) avec son bord porteur est situé au niveau du bord de support.

11. Ensemble selon l'une quelconque des revendications 1 à 9, dans lequel la première surface d'extrémité (12) et la seconde surface d'extrémité (12) s'étendent sur toute la hauteur des éléments de construction (1 ; 2).

12. Ensemble selon l'une quelconque des revendications précédentes, dans lequel le premier tuyau a un premier bord d'extrémité qui est situé dans une première paroi de l'espace d'installation ou est situé en retrait dans le matériau de base du premier élément de construction, et/ou dans lequel le second tuyau a un second bord d'extrémité qui est situé dans une seconde paroi de l'espace d'installation ou est situé en retrait dans le matériau de base du second élément de construction, dans lequel de préférence le premier tuyau et/ou le second tuyau à l'arrière du premier bord d'extrémité ou du second bord d'extrémité, respectivement, est/sont dépourvu(s) du matériau de base des éléments de construction et un espace annulaire s'étend autour de l'extrémité externe du premier tuyau et/ou du second tuyau.

13. Ensemble selon l'une quelconque des revendications précédentes, dans lequel le premier tuyau et le second tuyau ont une coupe transversale circulaire ayant un diamètre externe de 30 à 160 mm, de préférence, de 40 à 125 mm, de manière davantage préférée, de 50 à 90 mm, ou dans lequel le premier tuyau et le second tuyau ont une coupe transversale ovale, ou dans lequel le premier tuyau et le second tuyau ont une coupe transversale rectangulaire ou carrée.
